# EUROPEAN PATENT APPLICATION

(11) **EP 4 765 419 A1**
(43) Date of publication of application: **24.06.2026**
(21) Application number: 24904135.1
(22) Date of filing: 03.12.2024
(51) Int. Cl.: H01M 50/367, H01M 50/24, H01M 50/591, G01B 21/32

(54) **VENT ASSEMBLY FOR BATTERY PACK, BATTERY MANAGEMENT SYSTEM, AND BATTERY PACK INCLUDING SAME**

(30) Priority: 11.12.2023 KR 20230178720
(71) Applicant: LG Energy Solution, Ltd., Seoul 07335 (KR)
(72) Inventor: SHIN, Hak Yong, Daejeon 34122 (KR); LEE, Chang Hui, Daejeon 34122 (KR)
(74) Representative: Plasseraud IP
(86) International application number: PCT/KR2024/019535
(87) International publication number: WO 2025/127570

(57) **Abstract**

The present disclosure relates to a battery pack, and the battery pack according to an aspect of the present disclosure includes a battery pack housing; at least one battery assembly accommodated in the battery pack housing; and a vent assembly disposed in the battery pack housing, wherein the vent assembly includes a vent body configured to provide a vent channel for fluidic connection between an inside and an outside of the battery pack housing; a membrane disposed in the vent channel to keep dust or moisture out; and a detector of a film or sheet shape configured to block at least part of the vent channel to measure a pressure of the vent channel.

## Description

### TECHNICAL FIELD

### CROSS-REFERENCE TO RELATED APPLICATIONS

The present application claims priority to Korean Patent Application No. 10-2023-0178720 filed on December 11, 2023, the disclosure of which is incorporated herein by reference.

### TECHNICAL FIELD

The present disclosure relates to a vent assembly for a battery pack, a battery management system and a battery pack including the same, and more particularly, to a vent assembly for air venting in a battery pack housing, a battery management system using the same and a battery pack including the same.

### BACKGROUND ART

Secondary batteries have been used in the field of small-sized devices such as mobile devices or laptop computers, and recently, with the expansion of research to the field of medium- and large-sized devices, they are being widely used high voltage and large capacity applications including Energy Storage Systems (ESSs) or Electric Vehicles (EVs). Battery cells in secondary batteries may be put together and packaged to form a battery pack.

The battery pack may suffer from thermal propagation (TP) due to unexpected reasons such as collisions or shorts. The thermal propagation may cause fire or explosion incidents in the battery pack, and there is a need to prevent the thermal propagation for a user's safety.

To prevent thermal propagation, the battery pack is generally equipped with a safety system. For example, different types of sensors are installed at multiple locations of the battery pack to detect thermal runaway-induced abnormal conditions such as pressure rise, temperature rise or gas leakage. Additionally, the sensors transmit the detected data to a battery management system (BMS).

The battery management system may determine whether or not thermal propagation occurred in the battery pack using the data acquired from the sensors and operate a Battery Disconnect Unit (BDU). The battery disconnect unit is a sort of circuit breaker, and is used to perform the function of disconnecting the electrical connection between the battery pack and an external power source or load. When thermal propagation in the battery pack is detected, the battery management system may operate the battery disconnect unit to prevent additional fires or explosions triggered from the thermal propagation.

However, the thermal propagation mechanism of the fire or explosion in the battery pack may come in various forms depending on the connection method or placement of the plurality of battery cells in the battery pack, and the battery management system may malfunction or the sensors may fail to detect the abnormal condition of the battery pack. Accordingly, there is an urgent need for development of an approach to physically detect the abnormal condition of the battery pack irrespective of the internal structure of the battery pack.

### SUMMARY

### TECHNICAL PROBLEM

The present disclosure is designed to solve the above-described problem, and therefore the present disclosure is directed to providing a vent assembly for a battery pack for physically detecting an abnormal condition of the battery pack, a battery management system using the same and a battery pack including the same.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, disclosed is a battery pack including a battery pack housing; at least one battery assembly accommodated in the battery pack housing; and a vent assembly disposed in the battery pack housing, wherein the vent assembly includes a vent body configured to provide a vent channel for fluidic connection between an inside and an outside of the battery pack housing; a membrane disposed in the vent channel to keep dust or moisture out; and a detector of a film or sheet shape configured to block at least part of the vent channel to measure a pressure of the vent channel.

In this instance, the membrane and the detector may be arranged apart from each other outwards from the battery pack housing in a flow direction of air in the vent channel.

In this instance, the detector may be spaced apart from the membrane inwards from the battery pack housing.

In this instance, an outer surface of the vent body may have an opening connecting the outside of the battery pack housing to the vent channel, and the membrane may be configured to block the opening of the vent body.

In this instance, the vent channel may include a front side channel and a rear side channel in the flow direction, the detector may be disposed in the front side channel, and the membrane may be disposed in the rear side channel.

In this instance, the vent body may include a first body portion having the vent channel therein; and a second body portion disposed in the first body portion to divide the front side channel into a first front side channel and a second front side channel, and the detector may be configured to block at least part of the second front side channel.

In this instance, the first front side channel may connect an outside of the vent body to the rear side channel, and the detector may be configured to block the second front side channel.

In this instance, the second body portion may have a cylindrical shape having the second front side channel therein.

In this instance, the first body portion may have a cylindrical shape extended in the flow direction, and the second body portion may be extended parallel to the first body portion.

In this instance, the first body portion and the second body portion may be coaxially arranged.

In this instance, the second body portion may have an opening connected to the second front side channel at each of two sides in the extension direction, and the detector may be located closer to the opening located at a rear position in the flow direction among the openings of the second body portion.

In this instance, the detector may be configured to block the opening of the second body portion.

In this instance, the vent assembly may further include a cover coupled to an outer side of the vent body to protect the membrane.

In this instance, the cover may include a cover portion configured to cover an opening of the vent body connected to the vent channel; and an extension portion extended from an edge of the cover portion and surrounding an outer periphery of the vent body.

In this instance, the detector may be configured to be deformed by a change in the pressure of the vent channel.

In this instance, the vent assembly may be detachably coupled to the battery pack housing.

In this instance, the battery pack may further include a battery management system to control an operation of the battery assembly, wherein the battery management system may include a battery disconnect unit configured to disconnect an electrical connection between the battery assembly and an outside; and a control unit configured to control the battery disconnect unit based on the pressure measured by the detector.

According to another aspect of the present disclosure, there is provided a vent assembly for a battery pack including a vent body configured to provide a vent channel for fluidic connection between an inside and an outside of a battery pack housing; a membrane disposed in the vent channel to keep dust or moisture out; and a detector of a film or sheet shape configured to block at least part of the vent channel to measure a pressure of the vent channel.

According to still another aspect of the present disclosure, there is provided a battery management system for controlling a battery pack including a battery pack housing and a battery assembly accommodated in the battery pack housing, the battery management system including a battery disconnect unit configured to disconnect an electrical connection between the battery assembly and an outside; and a control unit configured to control the battery disconnect unit based on a pressure of a vent channel communicating an inside of the battery pack housing with an outside.

In this instance, the pressure of the vent channel may be measured using a detector of a film or sheet shape configured to block at least part of the vent channel.

### ADVANTAGEOUS EFFECTS

The vent assembly for the battery pack according to an aspect of the present disclosure and the battery pack including the same are configured such that the film or sheet-shaped detector that can be deformed by pressure blocks at least part of the vent channel. Accordingly, the abnormal condition may be physically detected using the deformation of the detector induced by the pressure change of the vent channel due to the abnormal condition of the battery pack.

According to the vent assembly for the battery pack according to an aspect of the present disclosure and the battery pack including the same, as the battery pack may be controlled according to the presence or absence of the physically detected abnormal condition, it may be possible to increase stability of the battery pack against thermal propagation.

The vent assembly for the battery pack according to an aspect of the present disclosure and the battery pack including the same may eliminate the need for different types of sensors for detecting abnormal conditions, thereby increasing space utility and design degree of freedom of the battery pack.

According to the vent assembly for the battery pack according to an aspect of the present disclosure and the battery pack including the same, as the detector may be disposed in the vent channel and thus may be located as far away from the battery assembly as possible, it may be possible to minimize the likelihood that the detector will malfunction or get damaged due to the abnormal condition (for example, fire or explosion) in the battery pack. Through this, it may be possible to detect the abnormal condition of the battery pack stably and accurately.

According to the battery management system according to an aspect of the present disclosure and the battery pack including the same, as the operation of the battery assembly may be controlled according to the presence or absence of the physically detected abnormal condition by the detector disposed in the vent channel, it may be possible to increase stability against thermal propagation.

The effects of the present disclosure are not limited to the aforementioned effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a battery pack according to an embodiment of the present disclosure when viewed from the top.
FIG. 2 is a horizontal cross-sectional view of a battery pack according to an embodiment of the present disclosure. In this instance, a battery management system is shown in a schematic block shape.
FIG. 3 is an enlarged view of section A in FIG. 2.
FIG. 4 is an exploded perspective view of a vent assembly for a battery pack according to an embodiment of the present disclosure when viewed from the front. For description of the present disclosure, parts of a vent body are cut away to make interior visible.
FIG. 5 is an exploded perspective view of a vent assembly for a battery pack according to an embodiment of the present disclosure when viewed from the rear. For description of the present disclosure, parts of a vent body are cut away to make interior visible.

### DETAILED DESCRIPTION

The exemplary embodiments of the present disclosure will be described in sufficient detail to enable those skilled in the art to easily carry out the present disclosure. However, the present disclosure may be embodied in many different forms and is not restricted or limited to the disclosed embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

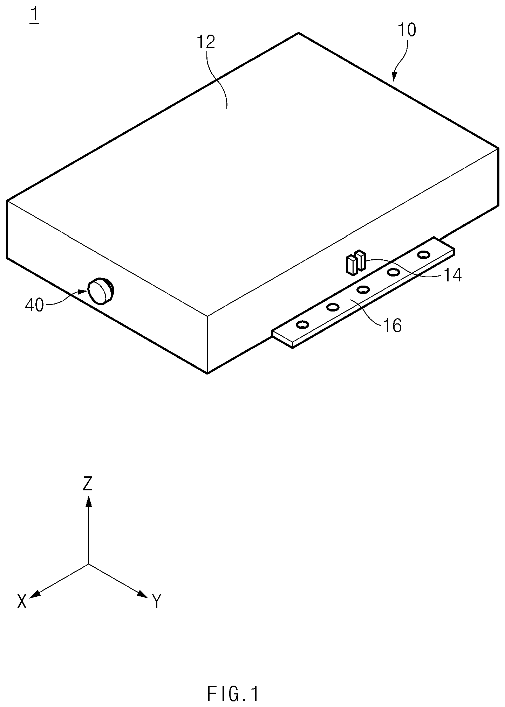

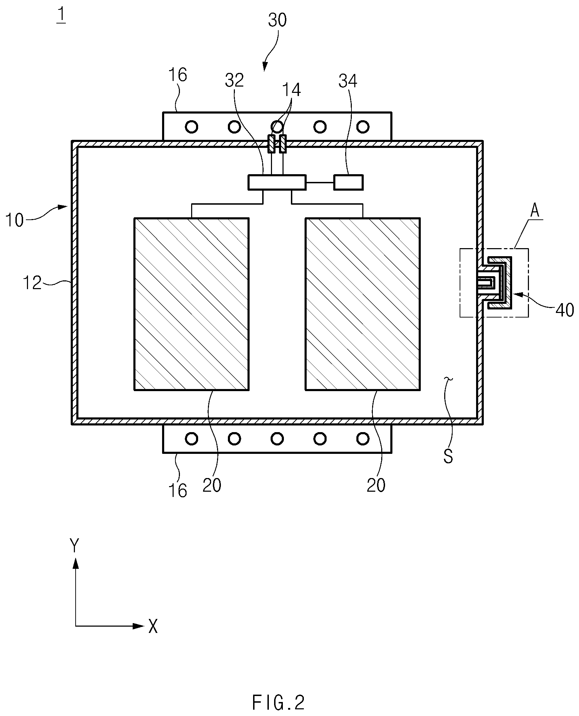

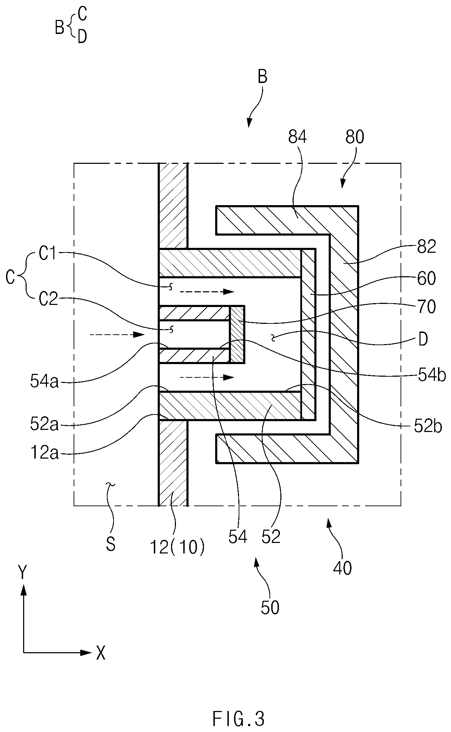

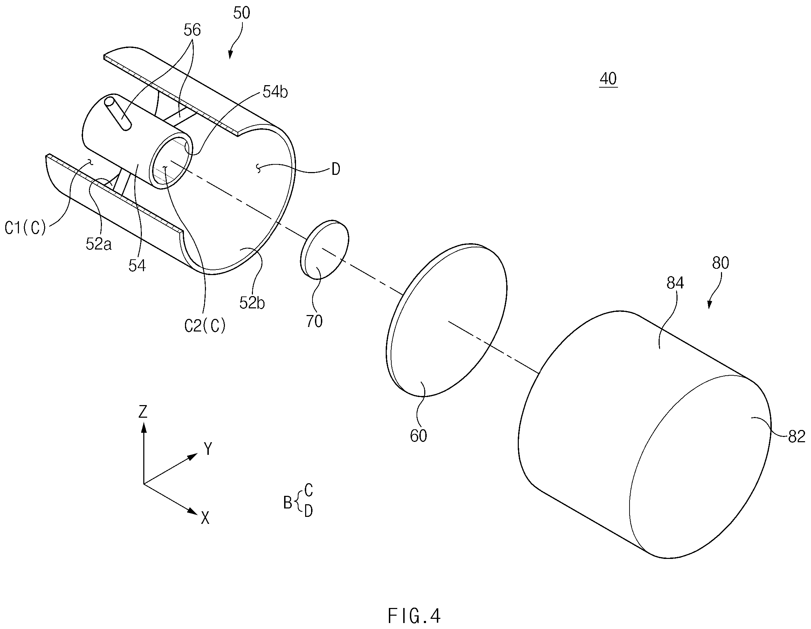

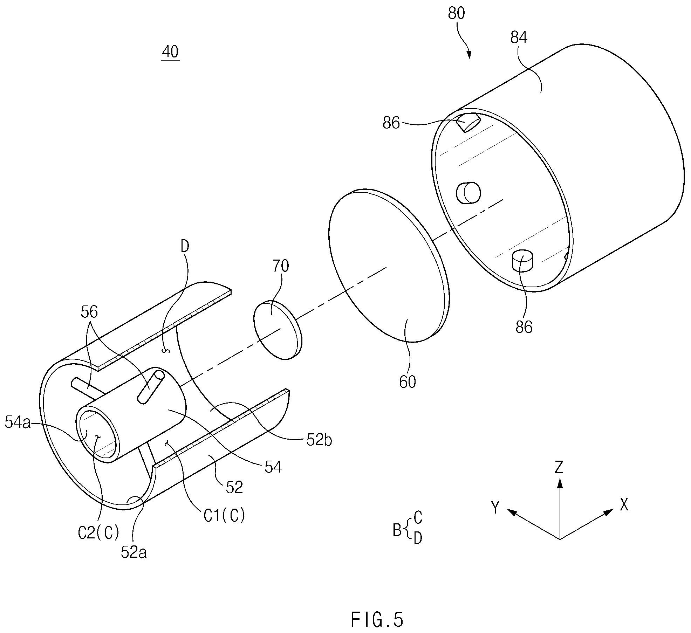

FIG. 1 is a perspective view of a battery pack according to an embodiment of the present disclosure when viewed from the top. FIG. 2 is a horizontal cross-sectional view of the battery pack according to an embodiment of the present disclosure. In this instance, a battery management system is shown in a schematic block shape. FIG. 3 is an enlarged view of section A in FIG. 2. FIG. 4 is an exploded perspective view of a vent assembly for a battery pack according to an embodiment of the present disclosure when viewed from the front. For description of the present disclosure, parts of a first body portion are cut away to make interior visible. FIG. 5 is an exploded perspective view of the vent assembly for the battery pack according to an embodiment of the present disclosure when viewed from the rear. For description of the present disclosure, parts of the first body portion are cut away to make interior visible.

In this instance, each element of the battery pack according to an embodiment of the present disclosure is schematically shown in the drawings, and the size of the element or the thickness of the line may be exaggerated for convenience of understanding.

FIGS. 1 and 2 show the battery pack 1 according to an embodiment of the present disclosure. The battery pack 1 according to this embodiment is a device for storing or discharging electrical energy. As an example, the battery pack 1 may be inside a vehicle to supply power for the operation of a motor, but is not limited thereto.

The battery pack 1 according to an embodiment of the present disclosure may include a battery pack housing 10 (hereinafter referred to as housing). In this embodiment, the housing 10 is configured to accommodate other elements of the battery pack 1. Through this, the housing 10 may protect the other elements from external shocks or pollution.

In this embodiment, the housing 10 may include a housing portion 12 formed of a box-shaped structure having an accommodation space S inside. The housing portion 12 may be made of a metal or reinforced plastic material to possess a predetermined stiffness.

In this instance, the housing portion 12 may be formed by coupling a plurality of plates, and may be provided as a single structure into which the plates are integrally formed. Meanwhile, the housing portion 12 is not limited to a particular shape and may have any shape that forms a predetermined space inside.

In this embodiment, the housing 10 may include a connection portion 14 that may be electrically connected to an external power source or load. The connection portion 14 may be provided in the form of a connector or a terminal electrically connected to a battery assembly 20 as described below.

As shown, a part of the connection portion 14 may be protruded outward from the housing portion 12. The connection portion 14 may be recessed inward from the housing portion 12. The connection portion 14 may be formed with various structures or shapes for establishing the electrical connection between the battery assembly 20 and the external power source or load.

Meanwhile, in this embodiment, the housing 10 may include a coupling portion 16 that may be secured and coupled to an external frame or base to fixedly position the housing portion 12 in the predetermined space. In this embodiment, the coupling portion 16 may have a flange shape at the edge of the housing portion 12.

In this instance, the coupling portion 16 may have a plurality of holes through which couplers such as screws or bolts-nuts are coupled to secure the housing portion 12 to the base or frame. The shape or structure of the coupling portion 16 may be properly modified in view of the shape of the space on which the battery pack 1 is placed or the structure of the base or frame to which the battery pack 1 is coupled.

Referring back to FIGS. 1 and 2, the battery pack 1 according to an embodiment of the present disclosure may include the battery assembly 20. The battery assembly 20 may be disposed in the accommodation space S of the housing 10 and be protected from external shocks or pollution.

In this embodiment, the battery assembly 20 may be formed by coupling at least one battery cell and frames for supporting the battery cell. In this instance, the battery cell may include a pouch-type secondary battery, a prismatic secondary battery or a cylindrical secondary battery, but is not limited to a particular type or structure.

The battery assembly 20 may be electrically connected to the connection portion 14. Accordingly, the battery assembly 20 may be electrically connected to the external power source through the connection portion 14 to store the electrical energy. Alternatively, the battery assembly 20 may be electrically connected to the external load to discharge the electrical energy. That is, the battery assembly 20 may take responsibility for the charge/discharge function of the battery pack 1.

In this instance, the battery assembly 20 may be provided in modular form, and may include at least one battery assembly 20. As shown, the battery assembly 20 may include two battery assemblies 20, but may include one battery assembly 20 or three or more battery assemblies 20.

In this instance, the plurality of battery assemblies 20 may be arranged in a predetermined pattern. As an example, the plurality of battery assemblies 20 may be arranged in a grid pattern within the accommodation space S. As another example, some of the plurality of battery assemblies 20 may be placed on the bottom surface of the housing 10, and the others may be stacked on the battery assemblies 20 placed on the bottom.

Additionally, the plurality of battery assemblies 20 may be electrically connected by a predetermined method. For example, the plurality of battery assemblies 20 may be connected in series or in parallel. Alternatively, some of the plurality of battery assemblies 20 may be connected in series, and the others may be connected in parallel. The arrangement pattern and connection method of the battery assemblies 20 may be variously modified according to the needs.

Meanwhile, an abnormal condition may occur in the battery assembly 20 for a certain reason. For example, the battery assembly 20 may catch fire or explode due to internal defects, external shocks or pollution, overcurrent or overvoltage, etc.

As described above, because the battery assembly 20 may be arranged and connected in various ways, the thermal propagation (TP) mechanism resulting from the abnormal condition of the battery assembly 20 may come in different forms.

That is, the thermal propagation in the battery pack 1 may vary depending on the arrangement of the battery assemblies 20 or their electrical connection method, or the shape of the accommodation space S, so it is difficult to predict. Here, the thermal propagation may refer to transfer of fire or explosion in one place of the battery pack 1 to another.

Accordingly, it may require a lot of time and resources to outline and design the proper placement of the sensors for detecting the abnormal condition of the battery assembly 20 within the housing 10. Additionally, these difficulties may limit the design degree of freedom and space utility of the battery pack 1.

To solve this problem, the battery pack 1 may include a detector 70 in the vent assembly 40 to detect the abnormal condition of the battery pack 1, and it will be described below.

Meanwhile, to prevent the influence of the abnormal condition of the battery assembly 20 from spreading to the other adjacent elements (i.e., thermal propagation), it is necessary to properly control the operation of the battery assembly 20. For example, it may be necessary to disconnect the electrical connection between the battery assembly 20 and the outside according to the needs.

To this end, the battery pack 1 according to an embodiment of the present disclosure may include a battery management system (BMS) 30 to control the operation of the battery assembly 20.

In this embodiment, the battery management system 30 may be a system for receiving information associated with the state of the battery assembly 20 from each battery assembly 20, and control the battery assemblies 20 all together based on the information. In this instance, the state of the battery assembly 20 may include the voltage, current, temperature of the battery assembly 20, the capacity of the stored electrical energy and so on.

In this embodiment, the battery management system 30 may include a control unit 34 to perform the above-described control. The control unit 34 may include circuitry, a processor, a central processing unit (CPU), a controller, an arithmetic logic unit, a computational logic circuit, a digital signal processor, a microcomputer, a Field-Programmable Gate Array (FPGA), a System on Chip (SoC), a programmable logic unit, microprocessor or any device capable of performing the following function.

Meanwhile, the battery management system 30 may perform the function of disconnecting the electrical connection between the battery assembly 20 and the outside as described above. To this end, the battery management system 30 may include a battery disconnect unit (BDU) 32. The operation of the battery disconnect unit 32 may be controlled by the control unit 34.

In this embodiment, the battery disconnect unit 32 may be disposed between the battery assembly 20 and the connection portion 14. Through this, the battery disconnect unit 32 may perform the function of electrically connecting them or disconnecting the electrical connection.

To perform these functions, the battery disconnect unit 32 may include relays, fuses, contacts, and so on. The battery disconnect unit 32 may include different types of elements commonly used in the art, and its detailed description is omitted.

In this instance, the control unit 32 of the battery management system 30 may be configured to physically detect the abnormal condition of the battery assembly 20 based on the pressure of a vent channel measured using the detector 70 as described below, and operate the battery disconnect unit 32 when the abnormal condition is detected. It will be described below together with the vent assembly 40.

As described above, in the battery pack 1 according to an embodiment of the present disclosure, when the abnormal condition occurs in the battery assembly 20, the electrical connection between the battery assembly 20 and the outside may be disconnected by the battery management system 30, and thus it may be possible to prevent thermal propagation such as fire spread or explosion.

Meanwhile, referring to FIGS. 1 to 3, the battery pack 1 according to an embodiment of the present disclosure may include the vent assembly 40. In this embodiment, the vent assembly 40 may be an assembly disposed in the housing 10 to vent air from the accommodation space S to atmosphere. The vent assembly 40 may be referred to as a vent plug or a vent valve.

Referring to FIGS. 3 to 5, the vent assembly 40 according to an embodiment of the present disclosure may include a vent body 50. The vent body 50 may be a structure for providing the vent channel B. In this embodiment, the vent channel B is a channel that makes fluidic connection between the accommodation space S of the housing 10 and the outside to vent air from the accommodation space S to atmosphere.

According to an embodiment of the present disclosure, the vent body 50 may include a first body portion 52. The first body portion 52 may be extended in a direction (X axis direction) of passing through the housing 10.

In this instance, the first body portion 52 may have an opening (hereinafter referred to as first front side opening 52a) that is open to the accommodation space S at one side in the extension direction, and an opening (hereinafter referred to as first rear side opening 52b) that is open to the outside of the housing 10 at the other side.

Additionally, the first body portion 52 may have the vent channel B connecting the first front side opening 52a to the first rear side opening 52b therein. In other words, the first body portion 52 may be provided as a hollow component having the vent channel B therein. For example, the first body portion 52 may have a cylindrical shape. Accordingly, the vent channel B may pass through the housing portion 12.

Meanwhile, in this embodiment, the vent channel B may include a front side channel C and a rear side channel D in the flow direction (hereinafter referred to as flow direction) of the air flowing outwards from the accommodation space S inside the housing 10.

The front side channel C may be defined as a part of the vent channel B located at the relatively front position when viewed from the flow direction, and the rear side channel D may be defined as a part of the vent channel B located at the relatively rear position when viewed from the flow direction.

According to this embodiment, the front part of the front side channel C in the flow direction may be connected to the first front side opening 52a. Additionally, the rear part of the rear side channel D in the flow direction may be connected to the first rear side opening 52b.

Accordingly, the air in the housing 10 may enter the front side channel C along the arrow indicated by the dashed line in FIG. 3 and exit the housing 10 via the rear side channel D.

That is, air from the accommodation space S of the housing 10 may be vented to atmosphere. The outdoor air may flow in a direction opposite to the flow direction and enter the housing 10. Meanwhile, the first body portion 52 is not limited to a particular shape and may have any shape that provides the vent channel B capable of air venting in the accommodation space S of the housing 10.

Meanwhile, in this embodiment, the first body portion 52 may be coupled to the housing 10. More specifically, in this embodiment, the housing portion 12 of the housing 10 may have a coupling hole 12a as shown in FIGS. 1 to 3. Additionally, the first body portion 52 may be inserted and coupled into the coupling hole 12a. Through this, the vent assembly 40 may be coupled (or installed) to the housing 10.

In this instance, the vent assembly 40 may be detachably coupled to the housing 10. Here, detachably coupling may represent coupling or decoupling without using a special tool or instrument.

To this end, the coupling hole 12a may have a screw thread (not shown) in the inner peripheral surface. Additionally, the first body portion 52 may have a screw thread (not shown) in the outer peripheral surface, and the screw thread of the first body portion 52 may be engaged with the screw thread of the coupling hole 12a. Accordingly, the vent assembly 40 may be detachably coupled to the housing 10 by a manual task.

As the coupling is made by the medium of the couplers such as screws or bolts-nuts, the vent assembly 40 and the housing 10 may be detachably coupled. Alternatively, according to the needs, the housing portion 12 and the vent body 50 of the vent assembly 40 may be integrally provided.

Meanwhile, referring back to FIGS. 1 to 3, the vent body 50 of the vent assembly 40 according to an embodiment of the present disclosure may include a second body portion 54. The second body portion 54 may be used to divide the front side channel C into a first front side channel C1 and a second front side channel C2. To this end, in this embodiment, the second body portion 54 may be located within the first body portion 52.

Referring to FIGS. 3 to 5, as shown, in this embodiment, the second body portion 54 may be provided as a hollow component. For example, the second body portion 54 may have a cylindrical shape. Accordingly, the second body portion 54 may divide the front side channel C into the inner, second front side channel C2 and the outer, first front side channel C1. The second body portion 54 may be provided in the shape of a partition wall that divides the front side channel C.

In this instance, the second body portion 54 may have an opening (hereinafter referred to as second front side opening 54a) that is open to the accommodation space S at one side in the extension direction. Additionally, the second body portion 54 may have an opening (hereinafter referred to as second rear side opening 54b) that is open to the rear side channel D at the other side.

Additionally, the second front side channel C2 may make fluidic connection between the second front side opening 54a and the second rear side opening 54b. Accordingly, the air in the accommodation space S may flow into the second front side channel C2.

In this instance, the second body portion 54 may be extended in the flow direction in parallel to the first body portion 52. That is, the first front side channel C1 and the second front side channel C2 may be extended parallel to each other in the X axis direction along the flow direction. Additionally, the first body portion 52 and the second body portion 54 may be coaxially arranged.

When the first body portion 52 and the second body portion 54 are coaxially arranged, or the first front side channel C1 and the second front side channel C2 are extended side by side in the flow direction, the air in the accommodation space S may flow into the second front side channel C2 more easily.

Accordingly, as the air pressure by the abnormal condition of the battery pack 1 may be immediately formed in the second front side channel C2, the abnormal condition of the battery pack 1 may be detected by the detector 70 as described below more quickly.

The second body portion 54 may have any shape or the second front side channel C2 may be extended in any direction that allows the air in the accommodation space S to enter the second front side channel C2, and the shape of the second body portion 54 or the extension direction of which the second front side channel C2 is not limited to a particular shape or direction.

Meanwhile, referring to FIGS. 4 and 5, the vent body 50 of the vent assembly 40 according to an embodiment of the present disclosure may include a body side support portion 56. The body side support portion 56 is configured to support the second body portion 54.

In this embodiment, the body side support portion 56 may have a rib shape that is extended across the first front side channel C1 and has two end portions, each connected or coupled to each of the inner peripheral surface the first body portion 52 and the outer peripheral surface of the second body portion 54.

Additionally, the body side support portion 56 may include a plurality of body side support portions 56 arranged at an interval along the circumference of the second body portion 54. The body side support portion 56 may be properly modified into any other shape or structure that supports the second body portion 54 according to the needs.

Referring back to FIGS. 3 to 5, the vent assembly 40 according to an embodiment of the present disclosure may include a membrane 60. The membrane 60 is used to remove dust and moisture in the air moving in and out of the accommodation space S of the housing 10.

As an example, the membrane 60 may be provided as a porous membrane made of PTEF, but is not limited thereto, and the membrane 60 may include any material that can filter out moisture or dust in the air.

In this embodiment, the membrane 60 may be disposed in the vent channel B. In this instance, the membrane 60 may be disposed in the rear side channel D of the vent channel B to block it.

More specifically, as shown, the membrane 60 may be configured to cover the first rear side opening 52b of the first body portion 52. Accordingly, the air flowing in the vent channel B may be free of moisture and dust.

Meanwhile, the vent assembly 40 according to an embodiment of the present disclosure may include the detector 70. The detector 70 is a film or sheet-shaped component for physically detecting the abnormal condition in the battery pack 1.

The detector 70 may be disposed to block at least part of the vent channel B. In this instance, the detector 70 may be configured to block only a part of the vent channel B, in order to prevent the venting function of the vent channel B from being reduced by the detector 70.

In this embodiment, the detector 70 may be deformed, bent or twisted by a pressure change caused by the abnormal condition to physically detect the abnormal condition. For example, the detector 70 may include a piezo sheet, but is not limited thereto.

As described above, in this embodiment, as the detector 70 is disposed in the vent channel B for air venting in the accommodation space S, it may be possible to stably detect the abnormal condition of the battery pack 1 irrespective of the change of thermal propagation mechanism depending on the placement or connection method of the battery assemblies 20.

Additionally, in this embodiment, as there is no need to install sensors for detecting the abnormal condition in the housing 10, it may be possible to dramatically enhance the design degree of freedom and space utility of the battery pack 1. Further, as the detector 70 may be located as far away from the battery assemblies 20 as possible, it may be possible to minimize the likelihood that the detector 70 will malfunction or get damaged by the abnormal condition.

In this instance, in this embodiment, the detector 70 may be spaced apart from the membrane 60 in the flow direction of the air flowing from the inside of the housing 10 to the outside. In this embodiment, the detector 70 is disposed in the second front side channel C2 of the vent channel B. To this end, the detector 70 may be disposed apart from the membrane 60 in the inward direction of the housing 10.

This is intended for deforming the detector 70 by interaction of air escaping from the accommodation space S with the detector 70 earlier than the membrane 60.

That is, by the above-described configuration, the detector 70 may be deformed more immediately by the pressure change caused by the abnormal condition. Through this, the detector 60 may detect the abnormal condition of the battery pack 1 more quickly and accurately.

In this instance, in this embodiment, the detector 70 may be located closer to the second rear side opening 54b than the second front side opening 54a in the second front side channel C2. In this embodiment, the detector 70 is configured to block the second rear side opening 54b of the second body portion 54.

As described above, when the detector 70 is located at the more rearward position in the flow direction, the second front side channel C2 located in front of the detector 70 may have a larger volume. That is, a larger amount of air in the air flow into the vent channel B by the abnormal condition of the battery pack 1 may condense in the second front side channel C2, and raise the pressure. Through this, the detector 70 of the vent assembly 40 according to this embodiment may accurately detect the abnormal condition of the battery pack 1.

Meanwhile, in this embodiment, the detector 70 is disposed in the second rear side opening 54b to completely block the second front side channel C2. However, the detector 70 may block only a part of the vent channel B at any location in the vent channel B so long as the abnormal condition of the battery pack 1 can be detected.

Further, the detector 70 may completely block a part of the vent channel B so long as the venting function of the vent channel B may not be excessively impeded by the detector 70.

Meanwhile, referring back to FIGS. 3 to 5, the vent assembly 40 according to an embodiment of the present disclosure may include a cover 80 to protect the vent body 50. The cover 80 may be coupled to the outer side of the vent body 50 to protect the vent body 50 and the membrane 60.

In this embodiment, the cover 80 may include a cover portion 82. The cover portion 82 may be provided in a flat plate shape and configured to cover the first rear side opening 54b and the membrane 60. The cover portion 82 may have a sufficient area to fully cover the first rear side opening 54b and the membrane 60.

In this instance, the cover portion 82 may be spaced apart from the first rear side opening 54b to allow air to go between the first rear side opening 54b and the cover portion 82.

In this embodiment, the cover 80 may include an extension portion 84. The extension portion 84 may be extended from the edge of the cover portion 82 and disposed around the first body portion 52 of the vent body 50. In other words, the extension portion 84 may be provided as a cylindrical component that surrounds the first body portion 52. Accordingly, the vent body 50 may be protected from external shocks or pollution.

In this instance, the inner diameter of the extension portion 84 may be somewhat larger than the outer diameter of the first body portion 52, to allow air to go between the inner periphery of the extension portion 84 and the outer periphery of the first body portion 52.

Meanwhile, in this embodiment, the cover 80 may include a cover side support portion 86. The cover side support portion 86 is used to support the cover portion 82 and the extension portion 84. The cover side support portion 86 may be a protrusion-shaped component protruded from the inner wall of the extension portion 84 to the outer peripheral surface of the first body portion 52. The cover side support portion 86 may include a plurality of cover side support portions 86 arranged at an interval in the circumferential direction of the first body portion 52.

In this instance, the end portion of the cover side support portion 86 may contact or may be coupled to the outer peripheral surface of the first body portion 52. Accordingly, the relative position between the cover 80 and the vent body 50 may be fixed.

When the end portion of the cover side support portion 86 is connected to the outer peripheral surface of the first body portion 52, the cover 80 and the vent body 50 may be integrally provided. The cover side support portion 86 is not limited to a particular shape or structure and may have any shape or structure that fixes the relative position between the vent body 50 and the cover 80.

Referring back to FIGS. 2 and 3, in this embodiment, the detector 70 may be configured to transmit a detection signal to the control unit 34 of the battery management system 30. As an example, the control unit 34 and the detector 70 may be electrically connected to each other.

Accordingly, the battery management system 30 according to this embodiment may disconnect the electrical connection between the battery assembly 20 and the outside according to the presence or absence of the abnormal condition physically detected by the detector 70. Through this, stability of the battery pack 1 against thermal propagation may be increased.

Meanwhile, FIGS. 1 and 2 show the elements for the control and venting of the battery pack among the elements of the battery pack according to an embodiment of the present disclosure, and the battery pack according to an embodiment of the present disclosure may further include other elements not shown in the drawings for the operation of the battery pack.

Although the present disclosure has been hereinabove described with regard to a limited number of embodiments and drawings, the present disclosure is not limited thereto, and may be embodied in different forms by persons having ordinary skill in the technical field pertaining to the present disclosure within the technical aspect of the present disclosure and the appended claims and their equivalent scope.

### [List of Reference Numerals]

1: Battery pack
10: Battery pack housing
20: Battery assembly
30: Battery management system
40: Vent assembly
50: Vent body
60: Membrane
70: Detector
80: Cover

## Claims

1. A battery pack comprising:
a battery pack housing;
at least one battery assembly accommodated in the battery pack housing; and
a vent assembly disposed in the battery pack housing,
wherein the vent assembly includes:
a vent body configured to provide a vent channel for fluidic connection between an inside and an outside of the battery pack housing;
a membrane disposed in the vent channel to keep dust or moisture out; and
a detector of a film or sheet shape configured to block at least part of the vent channel to measure a pressure of the vent channel.

2. The battery pack according to claim 1,
wherein the membrane and the detector are arranged apart from each other outwards from the battery pack housing in a flow direction of air in the vent channel.

3. The battery pack according to claim 2,
wherein the detector is spaced apart from the membrane inwards from the battery pack housing.

4. The battery pack according to claim 3,
wherein an outer surface of the vent body has an opening connecting the outside of the battery pack housing to the vent channel, and
wherein the membrane is configured to block the opening of the vent body.

5. The battery pack according to claim 2,
wherein the vent channel includes a front side channel and a rear side channel in the flow direction,
wherein the detector is disposed in the front side channel, and
wherein the membrane is disposed in the rear side channel.

6. The battery pack according to claim 5,
wherein the vent body includes:
a first body portion having the vent channel therein; and
a second body portion disposed in the first body portion to divide the front side channel into a first front side channel and a second front side channel, and
wherein the detector is configured to block at least part of the second front side channel.

7. The battery pack according to claim 6,
wherein the first front side channel connects an outside of the vent body to the rear side channel, and
wherein the detector is configured to block the second front side channel.

8. The battery pack according to claim 6,
wherein the second body portion has a cylindrical shape having the second front side channel therein.

9. The battery pack according to claim 8,
wherein the first body portion has a cylindrical shape extended in the flow direction, and
wherein the second body portion is extended parallel to the first body portion.

10. The battery pack according to claim 9,
wherein the first body portion and the second body portion are coaxially arranged.

11. The battery pack according to claim 9,
wherein the second body portion has an opening connected to the second front side channel at each of two sides in the extension direction, and
wherein the detector is located closer to the opening located at a rear position in the flow direction among the openings of the second body portion.

12. The battery pack according to claim 11,
wherein the detector is configured to block the opening of the second body portion.

13. The battery pack according to claim 1,
wherein the vent assembly further includes a cover coupled to an outer side of the vent body to protect the membrane.

14. The battery pack according to claim 13,
wherein the cover includes:
a cover portion configured to cover an opening of the vent body connected to the vent channel; and
an extension portion extended from an edge of the cover portion and surrounding an outer periphery of the vent body.

15. The battery pack according to claim 1,
wherein the detector is configured to be deformed by a change in the pressure of the vent channel.

16. The battery pack according to claim 1,
wherein the vent assembly is detachably coupled to the battery pack housing.

17. The battery pack according to claim 1, further comprising:
a battery management system to control an operation of the battery assembly,
wherein the battery management system includes:
a battery disconnect unit configured to disconnect an electrical connection between the battery assembly and an outside; and
a control unit configured to control the battery disconnect unit based on the pressure measured by the detector.

18. A vent assembly for a battery pack comprising:
a vent body configured to provide a vent channel for fluidic connection between an inside and an outside of a battery pack housing;
a membrane disposed in the vent channel to keep dust or moisture out; and
a detector of a film or sheet shape configured to block at least part of the vent channel to measure a pressure of the vent channel.

19. A battery management system for controlling a battery pack including a battery pack housing and a battery assembly accommodated in the battery pack housing, the battery management system comprising:
a battery disconnect unit configured to disconnect an electrical connection between the battery assembly and an outside; and
a control unit configured to control the battery disconnect unit based on a pressure of a vent channel communicating an inside of the battery pack housing with an outside.

20. The battery management system according to claim 19,
wherein the pressure of the vent channel is measured using a detector of a film or sheet shape configured to block at least part of the vent channel.
